# EUROPEAN PATENT APPLICATION

(11) **EP 3 885 817 A1**
(43) Date of publication of application: **29.09.2021**
(21) Application number: 19887810.0
(22) Date of filing: 10.10.2019
(51) Int. Cl.: G02B 27/01, B60K 35/00, C03C 27/12

(54) **HEAD-UP DISPLAY DEVICE**

(30) Priority: 20.11.2018 JP 2018217237
(71) Applicant: Central Glass Company, Limited, Ube-shi, Yamaguchi 755-0001 (JP)
(72) Inventor: IZUTANI, Kensuke, Matsusaka-shi, Mie 515-0001 (JP); MORI, Naoya, Matsusaka-shi, Mie 515-0001 (JP); NAKAMURA, Hiroki, Matsusaka-shi, Mie 515-0001 (JP)
(74) Representative: Mewburn Ellis LLP
(86) International application number: PCT/JP2019/039955
(87) International publication number: WO 2020/105306

(57) **Abstract**

A head-up display device that is to be mounted in a moving vehicle and enables an occupant in the moving vehicle to view a virtual image based on a reflected image of projection light in a projection section, the projection section including an interlayer film, a first glass plate disposed closer to an outside of the moving vehicle, and a second glass plate disposed closer to an inside of the moving vehicle, the first glass plate and the second glass plate disposed opposite each other with the interlayer film therebetween, the first glass plate having a first main surface exposed to the outside and a second main surface opposite the first main surface, the second glass plate having a fourth main surface exposed to the inside and a third main surface opposite the fourth main surface, the first glass plate and the second glass plate each having a tin surface on which tin is detected and a non-tin surface whose tin concentration is lower than the tin concentration on the tin surface, the fourth main surface being defined by the non-tin surface, the virtual image being based on a reflected image formed on the fourth main surface, the projection light including S-polarized light and P-polarized light, wherein when the projection light is mixed light of S-polarized light and P-polarized light in equal proportions, the projection light has a first maximum peak intensity within a wavelength range of 400 nm to less than 500 nm of 1.25 to 2.5 times a second maximum peak intensity within a wavelength range of 500 nm to 700 nm, a reflectance on the fourth main surface at a wavelength of the first maximum peak intensity is higher than a reflectance on the fourth main surface at a wavelength of the second maximum peak intensity, and a difference between the reflectances is 0.15% or less.

## Description

### TECHNICAL FIELD

The present disclosure relates to a head-up display (hereinafter, also referred to as "HUD") device that is mounted in a moving vehicle such as an automobile or aircraft and projects an image on a projection section in the front field of view of an occupant in the moving vehicle to enable the occupant to view the image.

### BACKGROUND ART

Windshields at the front of moving vehicles are used as the projection sections of HUD devices. The occupant views a virtual image based on a reflected image of projection light in the projection section. A reflected image can be formed on each of the inside main surface and the outside main surface of the projection section. When the intensity of projection light incident on each of these surfaces is the same, the luminance of the reflected image on the inside main surface is higher than that on the outside main surface. Thus, when a higher priority is given to the luminance of the image displayed on the HUD device, the HUD device is optically designed to enable viewing of a virtual image based on the reflected image formed on the inside main surface.

Reflected images formed on both the inside main surface and the outside main surface of the projection section form a virtual image that appears as a double image to the occupant (for the mechanism of double image generation, see Non-Patent Literature 1). HUD devices are classified as wedge-HUD type or light polarization-HUD type based on their approach for double image reduction.

The wedge-HUD type utilizes a projection section having a wedge profile with a thickness that changes gradually to adjust the optical paths of projection light rays such that the virtual image based on the reflected image formed on the inside main surface and the virtual image based on the reflected image formed on the outside main surface match when seen by the occupant (for the mechanism of double image reduction, see Non-Patent Literature 1).

The light polarization-HUD type reduces a double image based on the following mechanism. The projection section is formed using a laminate including a first light transmissive plate made of a material such as glass and disposed on an inside of the vehicle, a second light transmissive plate disposed on an outside of the vehicle, and a half-wave plate disposed between the first light transmissive plate and the second light transmissive plate. The components of the laminate are controlled to have equal refractive indexes in the visible spectrum. Projection light is incident on the projection section at Brewster's angle.

The Brewster's angle for light incident on a float glass plate having a soda-lime silicate glass composition defined in ISO 16293-1 is 56°.

The reflected image is formed on the inside main surface of the first light transmissive plate by projection light including S-polarized light. The projection light passing through the projection section is converted to P-polarized light by the half-wave plate. The P-polarized light, when reaching the outside main surface of the second light transmissive plate, is emitted to the outside without being reflected on the outside main surface. The occupant views a virtual image based on the reflected image of S-polarized light formed on the inside main surface of the first light transmissive plate.

Meanwhile, LEDs are used as the light source of an image projector used to apply the projection light to improve the luminance of the reflected image (for example, Patent Literatures 1 to 4).

### CITATION LIST

### Patent Literature

Patent Literature 1: JP 2007-87792 A
Patent Literature 2: JP 2010-177224 A
Patent Literature 3: JP 2011-90976 A
Patent Literature 4: JP 2016-180922 A

### Non-Patent Literature

Non-Patent Literature 1: "Development of New Active Driving Display", Mazda Technical Review, No.33 (2016), pp.60-65

### SUMMARY OF THE INVENTION

### Technical Problem

The increase in luminance of projection light involves an increase in intensity of light in the wavelength band with the highest energy of all visible light rays, i.e. so-called blue light. The increase in intensity of blue light is especially significant when the image projector employs LEDs, particularly white LEDs, or laser light as its light source. Blue light from a display device tires the eyes of a viewer looking at the display device.

Since display on the wedge-HUD type or the light polarization-HUD type viewed by the viewer is based on a reflected image formed on the inside main surface or the outside main surface of the projection section, such a HUD device may have a smaller influence of blue light on the occupant than other common display devices such as smartphones and televisions. Still, the main viewer of an HUD device mounted in a moving vehicle is the driver of the moving vehicle and the time for the driver to view the image on the HUD device is relatively long. Thus, the influence of blue light on the occupant cannot be underestimated.

In response to the above issue, the present invention aims to provide a HUD device with a smaller influence of blue light on the occupant.

### Solution to the Problem

In a head-up display device that is to be mounted in a moving vehicle and enables an occupant in the moving vehicle to view a virtual image based on a reflected image of projection light in a projection section, the projection section includes an interlayer film, a first glass plate disposed on an outside of the moving vehicle, and a second glass plate disposed on an inside of the moving vehicle, the first glass plate and the second glass plate opposing each other with the interlayer film therebetween.

The first glass plate and the second glass plate are each usually a glass plate produced by the float method (hereinafter, such a glass plate is also referred to as a "float glass plate"). A float glass plate, in the production thereof, is formed into a plate shape on a tin bath composed of molten tin. Thus, one of the main surfaces of the float glass plate is a tin surface which was in contact with the tin bath in the production thereof, and the other is a non-tin surface which is the surface opposite the tin surface.

The present inventors found that a float glass plate has a higher visible light reflectance on its tin surface than on its non-tin surface. This difference in visible light reflectance becomes significant on the incident surface of the float glass plate. A head-up display device according to an embodiment of the present invention takes advantage of the difference in visible light reflectance between the tin surface and the non-tin surface of the float glass plate.

In other words, a first head-up display device (hereinafter, also referred to as the first HUD device) according to an embodiment of the present invention is a head-up display device that is to be mounted in a moving vehicle and enables an occupant in the moving vehicle to view a virtual image based on a reflected image of projection light in a projection section,
the projection section including an interlayer film, a first glass plate disposed closer to an outside of the moving vehicle, and a second glass plate disposed closer to an inside of the moving vehicle, the first glass plate and the second glass plate disposed opposite each other with the interlayer film therebetween,
the first glass plate having a first main surface exposed to the outside and a second main surface opposite the first main surface,
the second glass plate having a fourth main surface exposed to the inside and a third main surface opposite the fourth main surface,
the first glass plate and the second glass plate each having a tin surface on which tin is detected and a non-tin surface whose tin concentration is lower than the tin concentration on the tin surface,
the fourth main surface being defined by the non-tin surface,
the virtual image being based on a reflected image formed on the fourth main surface,
the projection light including S-polarized light and P-polarized light,
wherein when the projection light is mixed light of S-polarized light and P-polarized light in equal proportions,
the projection light has a first maximum peak intensity within a wavelength range of 400 nm to less than 500 nm of 1.25 to 2.5 times a second maximum peak intensity within a wavelength range of 500 nm to 700 nm,
a reflectance on the fourth main surface at a wavelength of the first maximum peak intensity is higher than a reflectance on the fourth main surface at a wavelength of the second maximum peak intensity, and a difference between the reflectances is 0.15% or less.

The first HUD device utilizes light including S-polarized light and P-polarized light as projection light.

In comparison between light at a wavelength of the first maximum peak intensity and light at a wavelength of the second maximum peak intensity when mixed light of S-polarized light and P-polarized light in equal proportions is used as projection light, the reflectance of light at a wavelength of the first maximum peak intensity is higher. Still, the first HUD device uses a non-tin surface as the fourth main surface to keep the difference in reflectance to 0.15% or less.

The light at a wavelength of the first maximum peak intensity corresponds to blue light. Keeping the reflectance of light at a wavelength of the first maximum peak intensity to a certain level therefore means that the influence of blue light on the occupant is reduced. The reduction also means that the emphasis on blue-colored light in a reflected image based on the high-luminance full-color projection light in the projection section is reduced. This further increases the balance between the red, green, and blue colors of the reflected image, leading to an increase in the image quality of a virtual image based on the reflected image.

Also, a second head-up display device (hereinafter, also referred to as a second HUD device) according to another embodiment of the present invention is a head-up display device that is to be mounted in a moving vehicle and enables an occupant in the moving vehicle to view a virtual image based on a reflected image of projection light in a projection section,
the projection section including an interlayer film, a first glass plate disposed closer to an outside of the moving vehicle, and a second glass plate disposed closer to an inside of the moving vehicle, the first glass plate and the second glass plate disposed opposite each other with the interlayer film therebetween,
the first glass plate having a first main surface exposed to the outside and a second main surface opposite the first main surface,
the second glass plate having a fourth main surface exposed to the inside and a third main surface opposite the fourth main surface,
the first glass plate and the second glass plate each having a tin surface on which tin is detected and a non-tin surface whose tin concentration is lower than the tin concentration on the tin surface,
the fourth main surface being defined by the non-tin surface,
the virtual image being based on a reflected image formed on the fourth main surface,
the projection light including S-polarized light,
wherein when the projection light is incident on the first main surface at Brewster's angle,
the projection light has a first maximum peak intensity within a wavelength range of 400 nm to less than 500 nm of 1.25 to 2.5 times a second maximum peak intensity within a wavelength range of 500 nm to 700 nm,
a reflectance on the fourth main surface at a wavelength of the first maximum peak intensity is higher than a reflectance on the fourth main surface at a wavelength of the second maximum peak intensity, and a difference between the reflectances is 0.30% or less.

The second HUD device utilizes light including S-polarized light as projection light.

In comparison between light at a wavelength of the first maximum peak intensity and light at a wavelength of the second maximum peak intensity when light including S-polarized light is used as projection light, the reflectance of light at a wavelength of the first maximum peak intensity is higher. Still, the second HUD device uses a non-tin surface as the fourth main surface to keep the difference in reflectance to 0.30% or less.

The light at a wavelength of the first maximum peak intensity corresponds to blue light. Keeping the reflectance of light at a wavelength of the first maximum peak intensity to a certain level therefore means that the influence of blue light on the occupant is reduced. The reduction also means that the emphasis on blue-colored light in a reflected image based on the high-luminance full-color projection light in the projection section is reduced. This further increases the balance between the red, green, and blue colors of the reflected image, leading to an increase in the image quality of a virtual image based on the reflected image.

### Advantageous Effects of the Invention

HUD devices according to embodiments of the present invention have a reduced reflectance of light at a wavelength of the first maximum peak intensity, which corresponds to blue light, and thereby having a smaller influence of blue light on the occupant.

### BRIEF DESCRIPTION OF THE DRAWINGS

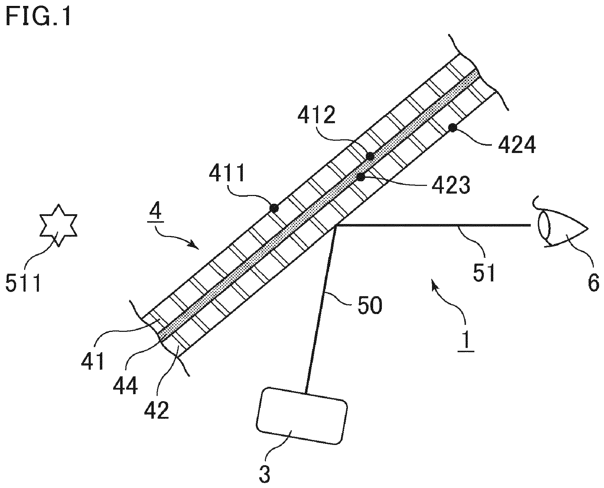

Fig. 1 is a schematic view showing the outline of a HUD device according to an embodiment of the present invention, and an optical path in the device.

### DESCRIPTION OF EMBODIMENTS

The first HUD device according to an embodiment of the present invention and the second HUD device according to an embodiment of the present invention are described with reference to the drawings.

Hereinafter, the first HUD device according to an embodiment of the present invention and the second HUD device according to an embodiment of the present invention are each referred to simply as a "HUD device" when no distinction is made therebetween.

Fig. 1 is a schematic view showing the outline of a HUD device according to an embodiment of the present invention and an optical path in the device.

Fig. 1 shows the optical path of projection light with a solid line.

In the HUD device 1, the projection section 4 includes an interlayer film 44, a first glass plate 41 disposed closer to the outside of a moving vehicle, and a second glass plate 42 disposed closer to the inside of the moving vehicle. The first glass plate 41 and the second glass plate 42 are disposed opposite each other with the interlayer film 44 therebetween.

The first glass plate 41 has a first main surface 411 exposed to the outside and a second main surface 412 opposite the first main surface. The second glass plate 42 has a fourth main surface 424 exposed to the inside and a third main surface 423 opposite the fourth main surface 424.

Projection light 50 is applied from an image projector 3 to the fourth main surface 424 to form a first reflected image on the fourth main surface 424. The occupant 6 views a virtual image 511 based on the first reflected image and appearing in an extension of an optical path 51.

The HUD device according to an embodiment of the present invention is optically designed to enable observation of a virtual image based on the first reflected image. Examples of such a HUD device include the wedge-HUD type and the S-HUD type. Specific structures thereof are described in detail in paragraphs below.

The first glass plate 41 and the second glass plate 42 each have a tin surface on which tin is detected and a non-tin surface whose tin concentration is lower than the tin concentration on the tin surface.

The first glass plate 41 and the second glass plate 42 are each preferably a float glass plate, more preferably a float glass plate having a soda-lime silicate glass composition defined in ISO 16293-1. The float glass plate is obtained by forming a molten glass material into a plate shape on a molten tin bath in the production process thereof. Thus, one of the main surfaces of the float glass plate is a tin surface which was in contact with the tin bath in the production thereof, and the other is a non-tin surface opposite the tin surface. In the process of forming a molten glass material into a plate shape, oxygen present in the atmosphere is dissolved in the tin bath or reacts with tin to form tin oxide. Tin and oxygen in the tin bath or part of tin oxide are/is taken into the surface of the glass material in contact with the tin bath, whereby a tin surface defines one of the main surfaces of the float glass plate. The other main surface opposite the tin surface is the non-tin surface.

The fourth main surface is defined by a non-tin surface.

The tin surface and the non-tin surface of a glass plate can be distinguished by the following method. The tin surface and the non-tin surface are different in the tin concentration on the surface, which is measurable by the X-ray fluorescence method.

The tin concentration on a surface is the concentration of Sn (unit: ppm) present in the range from the surface of the glass plate to tens of micrometers in the thickness direction. The X-ray fluorescence method includes determining the fluorescent X-ray intensities of standard specimens whose tin concentration on the surface has been measured by the wet chemical analysis, and creating a calibration curve based on the relationship between the fluorescent X-ray intensities and the tin concentrations on the surfaces. The tin concentration on a main surface of a float glass plate can be determined by comparing the fluorescent X-ray intensity of the main surface and the calibration curve. The tin concentration on the tin surface of a float glass plate is 10 ppm or more (the tin concentration on the non-tin surface is less than 10 ppm). Thus, whether the main surface of a float glass plate in question is a tin surface or a non-tin surface can be distinguished by determining the tin concentration on the main surface of the float glass plate.

The tin concentration on the tin surface can be controlled by, in the process of forming a molten glass material into a plate shape, adjusting the flow rate and/or concentration of gasses such as hydrogen and nitrogen in the atmosphere or adjusting the temperature of the molten glass material or the residence time of the material on the tin bath.

Typically, the tin concentration on a surface tends to be small in a more reducing atmosphere.

Also, the tin concentration on a surface tends to be large when the temperature of the molten glass material is higher and the residence time of the material on the tin bath is longer.

The tin concentration on the tin surface affects the visible light reflectance of the main surfaces of a glass plate, and is therefore preferably 10 ppm to 300 ppm, more preferably 30 ppm to 160 ppm, still more preferably 40 ppm to 120 ppm.

The tin concentration on the non-tin surface is preferably less than 10 ppm for a lower visible light reflectance. The amount is more preferably 5 ppm or less, still more preferably 2 ppm or less. The amount is even more preferably an unmeasurable amount, i.e. 0 ppm.

Described below are the structures and materials to implement a preferred embodiment of the projection section used for the head-up display devices according to embodiments of the present invention.

The projection section is laminated glass produced by sandwiching an interlayer film between a first glass plate and a second glass plate. In the case of an S-HUD type HUD device, the projection section includes a half-wave plate.

### Glass plates

The first glass plate and the second glass plate can each appropriately be a glass plate produced by the float method. The glass plate can be made of soda-lime silicate glass defined in ISO 16293-1 or can be one having a known glass composition such as aluminosilicate glass, borosilicate glass, or alkali-free glass.

Preferred is glass (green glass) having an iron oxide content in terms of Fe₂O₃ of 0.2% by mass to 2.0% by mass and an iron oxide content in terms of FeO of 0.1% by mass to 0.5% by mass in the glass composition. With green glass, the HUD devices according to embodiments of the present invention are likely to exert their effects significantly.

The thickness of each glass plate is preferably about 2 mm, but may be less than 2 mm for reduction in weight.

For a curved surface shape, two glass plates are heated to the softening point or higher, molded into the same surface shape by mold pressing or bending under their own weight, and cooled. Glass plates whose thickness is gradually changed can also be used.

In the case of the wedge-HUD type, glass plates whose thickness gradually changes can be used.

### Interlayer film

The interlayer film can be a resin interlayer film. The resin interlayer film is preferably a thermoplastic clear polymer. Examples of the polymer include polyvinyl butyral (PVB), ethylene vinyl acetate (EVA), acrylic resin (PMMA), urethane resin, polyethylene terephthalate (PET), and cycloolefin polymers (COP).

The surface of a resin interlayer film is usually embossed into uneven shape to prevent loss of transparency and bubble generation due to insufficient deaeration during lamination of glass plates into laminated glass. The HUD devices according to the embodiments of the present invention can also employ embossed resin interlayer films.

The resin interlayer film can be a partially colored one, one with a sound insulation layer sandwiched between layers, or one whose thickness is gradually changed. The resin interlayer film may also contain an ultraviolet absorber, an infrared absorber, an antioxidant, an antistatic agent, a heat stabilizer, a colorant, or an adhesion modifier as appropriate. The resin interlayer film may be extended under tension or passed between umbrella-shaped press rollers to be deformed into a fan shape.

In the case of the wedge-HUD type, an interlayer film whose thickness gradually changes can be used.

### Half-wave plate

Examples of the half-wave plate include retarders formed by uniaxially or biaxially extending a plastic film such as a polycarbonate film, a polyarylate film, a polyethersulfone film, or a cycloolefin polymer film, and retarders formed by aligning the liquid crystal polymer molecules in a certain direction and fixing them in the aligned state.

The polymer molecules are aligned, for example, by rubbing a transparent plastic film such as a polyester film or a cellulose film, or by forming an alignment film on a glass plate or a plastic film and subjecting the alignment film to rubbing or photo-alignment. The alignment is fixed, for example, by applying ultraviolet rays to an ultraviolet curable liquid crystal polymer in the presence of a photopolymerization initiator to cure the polymer through the polymerization reaction, by heating for crosslinking, or by aligning polymer molecules at high temperatures and quenching the polymer.

Any compound that is liquid crystalline when its molecules are aligned in a certain direction may be used as the liquid crystal polymer. For example, a compound that is in a twisted nematic alignment in its liquid crystal form and becomes glass at the liquid crystal transition temperature or lower. Examples thereof include optically active main-chain liquid crystal polymers such as polyester, polyamide, polycarbonate, and polyester imide; optically active side-chain liquid crystal polymers such as polyacrylate, polymethacrylate, polymalonate, polysiloxane, and polyether; and polymerizable liquid crystal. The examples can also include polymer compositions obtained by adding an optically active low molecular or high molecular compound to an optically inactive main-chain polymer or an optically inactive side-chain polymer.

The half-wave plate has only to be disposed in the optical path in the projection section. For example, the interlayer film may include a half-wave plate, or a half-wave plate may be disposed in contact with a glass plate.

Described below are the light source and the projection light to be incident on the projection section in the head-up display devices according to the embodiments of the present invention.

### Light source and projection light

The projection light from an image projector can be projection light including P-polarized light and S-polarized light.

Examples of the projection light including P-polarized light and S-polarized light include randomly polarized light (unpolarized light), circularly polarized light, elliptically polarized light, mixed light of P-polarized light and S-polarized light, and linearly polarized light that is neither P-polarized light nor S-polarized light.

The image projector can suitably be a projector capable of applying projection light including P-polarized light and S-polarized light. Examples of such a projector include DMD projection system-based projectors, laser scanning MEMS projection system-based projectors, and reflective liquid crystal-based projectors.

A polarizer disposed in the path of projection light can convert projection light including P-polarized light and S-polarized light to projection light including S-polarized light.

The mode is switched to the S-HUD type by adjusting projection light to be projection light including S-polarized light.

The polarizer is provided with a transmission window transmitting linearly polarized light oscillating in one direction, and is disposed with the transmission window faced in the direction in which the projection light travels.

Projection light is preferably incident on the projection section at Brewster's angle.

The projection light in the first HUD device according to an embodiment of the present invention includes S-polarized light and P-polarized light.

When the projection light is mixed light of S-polarized light and P-polarized light in equal proportions, the projection light has a first maximum peak intensity within a wavelength range of 400 nm to less than 500 nm of 1.25 to 2.5 times a second maximum peak intensity within a wavelength range of 500 nm to 700 nm, a reflectance on the fourth main surface at a wavelength of the first maximum peak intensity is higher than a reflectance on the fourth main surface at a wavelength of the second maximum peak intensity, and a difference between the reflectances is 0.15% or less.

The definition above does not limit the projection light used in the first HUD device according to an embodiment of the present invention to the "mixed light of S-polarized light and P-polarized light in equal proportions." The definition specifies the first maximum peak intensity, the second maximum peak intensity, and the reflectance when these values are measured using the "mixed light of S-polarized light and P-polarized light in equal proportions."

The projection light in the second HUD device according to an embodiment of the present invention includes S-polarized light.

When the projection light is incident on the first main surface at Brewster's angle, the projection light has a first maximum peak intensity within a wavelength range of 400 nm to less than 500 nm of 1.25 to 2.5 times a second maximum peak intensity within a wavelength range of 500 nm to 700 nm, a reflectance on the fourth main surface at a wavelength of the first maximum peak intensity is higher than a reflectance on the fourth main surface at a wavelength of the second maximum peak intensity, and a difference between the reflectances is 0.30% or less.

In the second HUD device, the projection light includes S-polarized light. This does not necessarily mean that the projection light includes S-polarized light when the projection light is emitted from the image projector. Light emitted as projection light including P-polarized light and S-polarized light from the image projector may be converted to projection light including S-polarized light by a polarizer.

When the difference between the reflectance at a wavelength of the first maximum peak intensity and the reflectance at a wavelength of the second maximum peak intensity in the second HUD device according to an embodiment of the present invention is determined, the projection light is incident at Brewster's angle. This defines the angle of incidence as a measurement condition, and does not mean that the angle of incidence of the projection light on the projection section in the second HUD device according to an embodiment of the present invention is limited to Brewster's angle.

The angle at which the projection light used in the second HUD device according to an embodiment of the present invention is incident on the projection section may vary to some extent from Brewster's angle.

For example, the angle of incidence may be about Brewster's angle ± 10°.

In one example, when Brewster's angle is 56°, the projection light may be incident on the projection section at an angle of 46° to 66°.

In the first HUD device and the second HUD device according to embodiments of the present invention, preferably, when the projection light is incident at an angle of 56°, the reflectance at a wavelength of the first maximum peak intensity is 7.5% to 7.8%.

Also, preferably, the wavelength of the first maximum peak intensity is 440 nm to 470 nm, and the wavelength of the second maximum peak intensity is 540 nm to 570 nm.

In the second HUD device according to an embodiment of the present invention, preferably, when the projection light is S-polarized light and incident on the fourth main surface at an angle of 56°, the fourth main surface has a reflectance at a wavelength of the first maximum peak intensity of 15.0% to 15.6%.

Described below are the wedge-HUD type and the S-HUD type to be applied to the head-up display devices according to the embodiments of the present invention.

The first HUD device is preferably the wedge-HUD type.

In the wedge-HUD type, the projection section has a wedge profile with a thickness that changes gradually in the region of the reflected image formed on the fourth main surface.

In the wedge-HUD type, the projection light may be with any polarization, and projection light including P-polarized light and S-polarized light is usable.

In this case, a reflected image is formed on the fourth main surface of the projection section, so that an occupant in the moving vehicle views a virtual image based on the reflected image on the fourth main surface. Another reflected image is formed on the first main surface of the projection section. Controlling the wedge profile to superimpose the two reflected images with each other prevents generation of a double image.

The second HUD device can be the wedge-HUD type or the S-HUD type. In the case of the wedge-HUD type, the second HUD device has the same stricture as the first HUD device except that the projection light includes S-polarized light.

In the S-HUD type, preferably, the projection light includes S-polarized light and the interlayer film includes a half-wave plate. Also preferably, the projection light including S-polarized light is incident on the first main surface at Brewster's angle. Here, a reflected image is formed on the fourth main surface of the projection section, and an occupant in the moving vehicle views a virtual image based on the reflected image on the fourth main surface. Projection light passing through the fourth main surface and travelling in the projection section is converted to P-polarized light by the half-wave plate, and emitted to the outside as P-polarized light without being reflected on the first main surface of the projection section. This prevents double image generation.

### Production procedure for laminated glass

Described below is a suitable example of a method of producing laminated glass to be used as the projection section of the head-up display devices according to embodiments of the present invention.

One of the glass plates is placed horizontally, and an interlayer film (resin interlayer film) is stacked on the glass plate, followed by stacking of the other glass plate on the interlayer film. When PVB is used as the resin interlayer film, the temperature and the humidity during the process are preferably maintained constant to keep the optimal moisture content of PVB. Then, the stack including the resin interlayer film sandwiched between the glass plates is heated to a temperature of 80°C to 100°C for preliminary bonding while the air existing between the glass plates and the resin interlayer film is deaerated. The stack is deaerated by, for example, a bag method of wrapping the stack of the glass plates and the resin interlayer film with a rubber bag made of a heat-resistant rubber, for example; a ring method of covering only the ends of the glass plates of the stack with rubber rings and sealing the stack; or a roller method of passing the stack between rollers to press the stack from the outermost two glass plates. Any of these methods may be used.

After the preliminary bonding, the resulting laminate is taken out of the rubber bag in the case of the bag method, or the rubber rings are removed from the laminate in the case of the ring method. The laminate is then placed in an autoclave for heating and pressurization (final bonding) where the laminate is heated at a temperature of 120°C to 150°C and a high pressure of 10 to 15 kg/cm² for 20 to 40 minutes. After this process, the laminate is cooled to 50°C or lower, depressurized, and the resulting laminated glass is taken out of the autoclave.

The laminated glass, when used as the projection section of a wedge-HUD type HUD device, includes an interlayer film or glass plates whose thickness is gradually changed.

Use of an interlayer film or glass plates whose thickness is gradually changed imparts a wedge profile with a thickness that changes gradually to the region of the reflected image in the projection section.

The laminated glass, when used as the projection section of an S-HUD type HUD device, includes a half-wave plate as a layer in the interlayer film between the glass plates, or includes a half-wave plate bonded to the surface of a glass plate in contact with the interlayer film. The half-wave plate has only to be disposed in a region where a reflected image is formed, and may have the same size as the glass plates or may be smaller than the glass plates.

### EXAMPLES

Here, the measured visible light reflectance values of the tin surfaces and the non-tin surfaces of float glass plates are described.

The float glass plates used in the following measurements each were any glass plate of the four types, namely clear glass, green glass, heat-absorbing glass, and UV-cut heat-absorbing glass.

Each glass plate has a thickness of 2 mm.

First, light including S-polarized light and P-polarized light at a ratio of 1:1 was incident on the tin/non-tin surface of each glass plate at angles of incidence of 40° to 70° to determine the reflectance values at these angles (excluding the reflectance on the back surface). Thereby, the "difference" and "ratio" between the reflectance values at the wavelength of the first maximum peak intensity and the wavelength of the second maximum peak intensity which were respectively set to 450 nm and 560 nm were determined.

The visible light reflectance values of the tin surface and the non-tin surface of each float glass plate were measured in accordance with JIS R3106 (1998) using their spectral reflectance spectra in the wavelength range of 380 nm to 780 nm.

Here, the angle of incidence of projection light on a measurement specimen was changed from that in the JIS standard above to 40°, 56° (Brewster's angle), 65°, or 70°, and the light spectrum relating to the weighing factor was changed from the JIS standard to CIE Illuminant A.

Also, measurements were made on visible light reflectance values for reflection of the measurement light on the incident surface of a glass plate (corresponding to the fourth main surface 424 of the projection section 4) toward the air.

In the measurement of the spectral reflectance spectrum on the incident surface toward the air, the emitting surface of the glass plate was blasted and coated with black matte spray to reduce the reflection of light on the emitting surface.

**Table 1**

| Glass type | Angle of incidence | Reflectance (%) | | | | | | | |
|---|---|---|---|---|---|---|---|---|---|
| | | Incidence and reflection on tin surface | | | | Incidence and reflection on non-tin surface | | | |
| | | <A> 450 nm | <B> 560 nm | <A>-<B> | <A>/<B> | <C> 450 nm | <D> 560 nm | <C>-<D> | <C>/<D> |
| Clear glass | 40 | 5.20 | 5.04 | 0.16 | 1.03 | 4.92 | 4.81 | 0.11 | 1.02 |
| | 56 | 7.92 | 7.76 | 0.16 | 1.02 | 7.68 | 7.55 | 0.13 | 1.02 |
| | 65 | 12.78 | 12.61 | 0.17 | 1.01 | 12.27 | 12.13 | 0.14 | 1.01 |
| | 70 | 17.80 | 17.64 | 0.16 | 1.01 | 17.45 | 17.31 | 0.14 | 1.01 |
| Green glass | 40 | 5.21 | 5.03 | 0.18 | 1.04 | 4.88 | 4.76 | 0.12 | 1.03 |
| | 56 | 7.98 | 7.79 | 0.19 | 1.02 | 7.63 | 7.50 | 0.13 | 1.02 |
| | 65 | 12.65 | 12.44 | 0.21 | 1.02 | 12.28 | 12.13 | 0.15 | 1.01 |
| | 70 | 17.75 | 17.55 | 0.20 | 1.01 | 17.41 | 17.26 | 0.15 | 1.01 |
| UV-cut heat-absorbing glass | 40 | 5.30 | 5.11 | 0.19 | 1.04 | 4.84 | 4.74 | 0.10 | 1.02 |
| | 56 | 8.12 | 7.93 | 0.19 | 1.02 | 7.68 | 7.55 | 0.13 | 1.02 |
| | 65 | 12.75 | 12.56 | 0.19 | 1.02 | 12.29 | 12.16 | 0.13 | 1.01 |
| | 70 | 17.76 | 17.58 | 0.18 | 1.01 | 17.32 | 17.18 | 0.14 | 1.01 |

The visible light reflectance values of laminated glass products were also measured.

The laminated glass products each had the composition as shown in Table 2. The visible light reflectance on the fourth main surface, on which projection light was incident, was measured for both cases where the fourth main surface was defined by a tin surface and the fourth main surface was defined by a non-tin surface.

The angle of incidence of projection light on the measurement sample was 56° (Brewster's angle).

When the fourth main surface of the laminated glass was defined by a tin surface, the first main surface was defined by a non-tin surface. When the fourth main surface was defined by a non-tin surface, the first main surface was defined by a tin surface.

**Table 2**

| Laminate composition | Angle of incidence | Reflectance (%) | | | | | | | |
|---|---|---|---|---|---|---|---|---|---|
| | | Incidence and reflection on tin surface | | | | Incidence and reflection on non-tin surface | | | |
| | | <A> 450 nm | <B> 560 nm | <A>-<B> | <A>/<B> | <C> 450 nm | <D> 560 nm | <C>-<D> | <C>/<D> |
| Two green glass plates | 56 | 7.97 | 7.78 | 0.19 | 1.02 | 7.68 | 7.57 | 0.11 | 1.01 |
| Two heat-absorbing glass plates | 56 | 8.21 | 7.98 | 0.23 | 1.03 | 7.68 | 7.57 | 0.11 | 1.01 |
| Two UV-cut heat-absorbing glass plates | 56 | 8.14 | 7.91 | 0.23 | 1.03 | 7.63 | 7.55 | 0.08 | 1.01 |

As shown in Table 1 and Table 2, in the case of incidence and reflection on the non-tin surfaces, the difference (<C> - <D>) in reflectance at the wavelength of the first maximum peak intensity (450 nm) and the wavelength of the second maximum peak intensity (560 nm) was 0.15% or less.

In other words, the reflectance of light at the wavelength of the first maximum peak intensity, which corresponds to blue light, was low suggesting that the influence of blue light on the occupant is reduced.

In contrast, in the case of incidence and reflection on the tin surfaces, the difference (<A> - <B>) in reflectance at the wavelength of the first maximum peak intensity (450 nm) and the wavelength of the second maximum peak intensity (560 nm) was more than 0.15%, suggesting that blue light has a large influence on the occupant.

Subsequently, light which is S-polarized light was incident on the tin/non-tin surface of each type of glass shown in Table 3 at an angle of incidence of 56°, which was Brewster's angle, to determine the reflectance values at this angle (excluding the reflectance on the back surface). Thereby, the "difference" and "ratio" between the reflectance values at the wavelength of the first maximum peak intensity and the wavelength of the second maximum peak intensity which were respectively set to 450 nm and 560 nm were determined.

The measurement system for the visible light reflectance measurement was the same as the measurement system shown in Table 1.

The visible light reflectance values of laminated glass products were also measured.

The laminated glass products each had the composition as shown in Table 4. The visible light reflectance on the fourth main surface, on which projection light was incident, was measured for both cases where the fourth main surface was defined by a tin surface and the fourth main surface was defined by a non-tin surface.

When the fourth main surface of the laminated glass was defined by a tin surface, the first main surface was defined by a non-tin surface. When the fourth main surface was defined by a non-tin surface, the first main surface was defined by a tin surface.

**Table 3**

| Glass type | Angle of incidence | Reflectance (%) | | | | | | | |
|---|---|---|---|---|---|---|---|---|---|
| | | Incidence and reflection on tin surface | | | | Incidence and reflection on non-tin surface | | | |
| | | <A> 450 nm | <B> 560 nm | <A>-<B> | <A>/<B> | <C> 450 nm | <D> 560 nm | <C>-<D> | <C>/<D> |
| Clear glass | 56 | 15.79 | 15.48 | 0.31 | 1.02 | 15.33 | 15.07 | 0.27 | 1.02 |
| Green glass | 56 | 15.91 | 15.54 | 0.37 | 1.02 | 15.23 | 14.97 | 0.26 | 1.02 |
| UV-cut heat-absorbing glass | 56 | 16.18 | 15.80 | 0.38 | 1.02 | 15.32 | 15.07 | 0.25 | 1.02 |

**Table 4**

| Laminate composition | Angle of incidence | Reflectance (%) | | | | | | | |
|---|---|---|---|---|---|---|---|---|---|
| | | Incidence and reflection on tin surface | | | | Incidence and reflection on non - tin surface | | | |
| | | <A> 450 nm | <B> 560 nm | <A>-<B> | <A>/<B> | <C> 450 nm | <D> 560 nm | <C>-<D> | <C>/<D> |
| Two green glass plates | 56 | 15.86 | 15.50 | 0.36 | 1.02 | 15.29 | 15.09 | 0.20 | 1.01 |
| Two heat-absorbing glass plates | 56 | 16.33 | 15.88 | 0.45 | 1.03 | 15.29 | 15.07 | 0.22 | 1.01 |
| Two UV-cut heat-absorbing glass plates | 56 | 16.20 | 15.76 | 0.44 | 1.03 | 15.20 | 15.05 | 0.15 | 1.01 |

In the case of incidence and reflection on the non-tin surfaces, the difference (<C> - <D>) in reflectance at the wavelength of the first maximum peak intensity (450 nm) and the wavelength of the second maximum peak intensity (560 nm) was 0.30% or less.

In other words, the reflectance of light at the wavelength of the first maximum peak intensity, which corresponds to blue light, was low, suggesting that the influence of blue light on the occupant is reduced.

In contrast, in the case of incidence and reflection on the tin surfaces, the difference (<A> - <B>) in reflectance at the wavelength of the first maximum peak intensity (450 nm) and the wavelength of the second maximum peak intensity (560 nm) was more than 0.30%, suggesting that blue light has a large influence on the occupant.

Subsequently, each laminated glass shown in Table 5 was used as the projection section 4. The projection section 4 and the image projector 3, which applies full-color projection light including S-polarized light whose first maximum peak intensity was twice its second maximum peak intensity, were used to produce the HUD device 1. The HUD device 1 utilizes the half-wave plate in the laminated glass to convert S-polarized light incident on the projection section 4 to P-polarized light. In the HUD device 1, projection light was incident on the projection section 4 at an angle of incidence of 56°, which is Brewster's angle. Furthermore, each laminated glass shown in Table 5 was produced to allow projection light to be incident and reflected on the tin surface and the non-tin surface.

Table 5 shows the results of observation of the image projected on each laminated glass (projection section 4). The balance between red, green, and blue colors of the image was improved in the case of "Incidence/reflection on non-tin surface." This shows that the HUD devices according to embodiments of the present invention can reduce the influence of blue light on the occupant.

**Table 5**

| Laminated glass | Results of observing image (virtual image) in HUD device | |
|---|---|---|
| | Incidence and reflection on tin surface | Incidence and reflection on non-tin surface |
| Green glass 2 mm PVB_half-wave plate_PVB_ green glass 2 mm | An image with emphasized bluish tint was observed. | Balance between red, green, and blue colors of the image was improved. |
| Heat-absorbing glass 2 mm_ PVB_half-wave plate_PVB_ heat-absorbing glass 2mm | An image with emphasized bluish tint was observed. | Balance between red, green, and blue colors of the image was improved. |
| UV-cut heat-absorbing glass 2mm_ PVB_half-wave plate_PVB_ UV-cut heat-absorbing glass 2 mm | An image with emphasized bluish tint was observed. | Balance between red, green, and blue colors of the image was improved. |

### INDUSTRIAL APPLICABILITY

A HUD device can be provided which can reduce the influence of blue light included in projection light projected on the windshields of moving vehicles such as automobiles.

### REFERENCE SIGNS LIST

- 1: HUD device
- 3: image projector
- 4: projection section
- 6: occupant
- 41: first glass plate
- 411: first main surface
- 412: second main surface
- 42: second glass plate
- 423: third main surface
- 424: fourth main surface
- 44: interlayer film
- 50: projection light
- 51: optical path based on first reflected image
- 511: virtual image based on first reflected image

## Claims

1. A head-up display device for mounting in a moving vehicle to enable an occupant of the moving vehicle to view a virtual image based on a reflected image of projection light in a projection section,
the projection section including an interlayer film, a first glass plate to be disposed closer to an outside of the moving vehicle and a second glass plate to be disposed closer to an inside of the moving vehicle, the first glass plate and the second glass plate being disposed in opposition to one another with the interlayer film therebetween,
the first glass plate having a first main surface exposed to the outside and a second main surface opposite the first main surface,
the second glass plate having a fourth main surface exposed to the inside and a third main surface opposite the fourth main surface,
the first glass plate and the second glass plate each having a tin surface on which tin is detected and a non-tin surface whose tin concentration is lower than the tin concentration on the tin surface,
the fourth main surface being defined by the non-tin surface,
the virtual image being based on a reflected image formed on the fourth main surface,
the projection light including S-polarized light and P-polarized light,
wherein when the projection light is mixed light of S-polarized light and P-polarized light in equal proportions,
the projection light has a first maximum peak intensity, within a wavelength range of 400 nm to less than 500 nm, which is 1.25 to 2.5 times a second maximum peak intensity, within a wavelength range of 500 nm to 700 nm,
a reflectance at the fourth main surface at a wavelength of the first maximum peak intensity is higher than a reflectance at the fourth main surface at a wavelength of the second maximum peak intensity, and a difference between the reflectances is 0.15% or less.

2. A head-up display device for mounting in a moving vehicle to enable an occupant of the moving vehicle to view a virtual image based on a reflected image of projection light in a projection section,
the projection section including an interlayer film, a first glass plate to be disposed closer to an outside of the moving vehicle, and a second glass plate to be disposed closer to an inside of the moving vehicle, the first glass plate and the second glass plate disposed in opposition to each other with the interlayer film therebetween,
the first glass plate having a first main surface exposed to the outside and a second main surface opposite the first main surface,
the second glass plate having a fourth main surface exposed to the inside and a third main surface opposite the fourth main surface,
the first glass plate and the second glass plate each having a tin surface on which tin is detected and a non-tin surface whose tin concentration is lower than the tin concentration on the tin surface,
the fourth main surface being defined by the non-tin surface,
the virtual image being based on a reflected image formed on the fourth main surface,
the projection light including S-polarized light, wherein when the projection light is incident on the first main surface at Brewster's angle,
the projection light has a first maximum peak intensity, within a wavelength range of 400 nm to less than 500 nm, which is 1.25 to 2.5 times a second maximum peak intensity, within a wavelength range of 500 nm to 700 nm,
a reflectance at the fourth main surface at a wavelength of the first maximum peak intensity is higher than a reflectance at the fourth main surface at a wavelength of the second maximum peak intensity, and a difference between the reflectances is 0.30% or less.

3. The head-up display device according to claim 2 wherein the interlayer film includes a half-wave plate.

4. The head-up display device according to claim 1 wherein when the projection light is mixed light of S-polarized light and P-polarized light in equal proportions, and incident on the fourth main surface at an angle of 56°, the fourth main surface has a reflectance at a wavelength of the first maximum peak intensity of 7.5% to 7.8%.

5. The head-up display device according to claim 2 or 3 wherein when the projection light is S-polarized light and incident on the fourth main surface at an angle of 56°, the fourth main surface has a reflectance at a wavelength of the first maximum peak intensity of 15.0% to 15.6%.

6. The head-up display device according to any one of claims 1 to 5,
wherein the second glass plate is made of soda-lime silicate glass having a glass composition as defined in ISO 16293-1, and
the second glass plate has an iron oxide content (Fe₂O₃) of from 0.2% by mass to 2.0% by mass and an iron oxide content (FeO) of from 0.1% by mass to 0.5% by mass in the glass composition.

7. The head-up display device according to any one of claims 1 to 6 wherein the wavelength of the first maximum peak intensity is from 440 nm to 470 nm and the wavelength of the second maximum peak intensity is from 540 nm to 570 nm.

8. The head-up display device according to any one of claims 1 to 7 wherein the projection section has a wedge profile with a thickness that changes gradually in a region of the reflected image.
